# EUROPÄISCHE PATENTSCHRIFT

(11) **EP 2 860 091 B1**
(45) Veröffentlichungstag und Bekanntmachung des Hinweises auf die Patenterteilung: **18.07.2018**
(21) Anmeldenummer: 14188140.9
(22) Anmeldetag: 08.10.2014
(51) Int. Cl.: B62J 29/00, B62J 11/00

(54) **Zweiradspiegelhalterung**
Bicycle mirror holder
Fixation de rétroviseur pour deux roues

(30) Priorität: 09.10.2013 DE 202013104557 U
(43) Veröffentlichungstag der Anmeldung: 15.04.2015
(73) Patentinhaber: Krampe Werkzeuge GmbH & Co. KG, 59387 Ascheberg-Herbern (DE)
(72) Erfinder: Krampe, Franz, 59387 Herbern (DE)
(74) Vertreter: Tarvenkorn, Oliver

(56) Entgegenhaltungen:
- DE-A1- 10 328 657
- US-A1- 2011 024 598
- US-A1- 2011 140 471

## Beschreibung

- Die Erfindung betrifft eine Zweiradspiegelhalterung mit den Merkmalen des Oberbegriffs des Anspruchs 1.

Bei mit Verbrennungsmotoren ausgestatteten Zweirädern wie Mofas ist ein Seitenspiegel aufgrund der Straßenverkehrszulassungsvorschriften vorgeschrieben. Auch bei den zunehmend verbreiteten Fahrrädern mit elektrischem Hilfsantrieb, den sogenannten E-Bikes oder Pedelecs, ist die Anbringung eines Spiegels am Zweiradlenker sinnvoll, um im fließenden Verkehr Sicht auf die hinten fahrenden Verkehrsteilnehmer zu haben, insbesondere beim Abbiegen.

Einfache Ausführungen von Spiegelhalterungen sehen aus Stahlblech tiefgezogene Klemmvorrichtungen vor, die sich um das Lenkerrohr legen und mit einer Klemmschraube daran fixiert werden. Die scharfkantigen Ränder des Blechzuschnitts beschädigen dabei fast immer die Oberflächenbeschichtung des Lenkers. Darüber hinaus sind die bekannten Spiegelhalterungen dafür ausgelegt, nach einer einmaligen Einstellung durch den Benutzer fest und dauerhaft arretiert zu werden, um die gewählte Stellung des Spiegels auch während der Fahrt beizubehalten.

Bekannt sind auch Spiegelhalterarme mit einem kugelförmigen Ende, das in einer entsprechenden Kugelaufnahme an der lenkerseitigen Halterung gelagert ist, sodass eine mehrachsige Verstellung möglich ist. Nachteilig ist hierbei, dass bei höherer Geschwindigkeit, bei Stößen oder auch bei Fahrten über unebene Fahrbahnen die Klemmkraft in der Kugelverbindung mitunter nicht ausreichend ist, um die gewählte Stellung des Spiegelhalterarms beizubehalten.

Anders als bei Zweirädern mit Verbrennungsmotoren werden Fahrräder mit elektrischen Antrieben oft auf Halterungen an PKWs oder Wohnmobilen mitgeführt. Wenn z. B. mehrere Fahrräder nebeneinander auf den Fahrradträgern zu platzieren sind, wirken die seitlich über das Lenkerende hinaus ragenden Spiegelhalterarme störend und müssen weggeschwenkt werden. Bei bekannten Spiegelhalterungen muss dazu die Klemmung gelöst werden und die Spiegel müssen dann vor jedem Fahrtantritt erneut justiert und festgestellt werden.

Die DE 103 28 657 A gibt eine Zweiradspiegelhalterung an, die insbesondere für Motorräder vorgesehen ist. Das Spiegelhalterelement kann hierbei gegenüber dem Lenkerbefestigungselement verdreht werden. Zugleich sind die Elemente aber in der Schwenkebene formschlüssig aneinander festgelegt. Das Ein- und Ausrücken aus der formschlüssigen Verbindung erfolgt gegen die Kraft einer Zugfeder, die die beiden Teilelemente der Zweiradspiegelhalterung aneinander zieht. Hierfür ist eine große Bauhöhe erforderlich. Um bei Kollisionen überhaupt eine Aufhebung der Formschlussverbindungen zu ermöglichen, müssen die Formschlusselemente stark gerundet bzw. angeschrägt ausgebildet sein und die Vorspannung darf nur sehr gering ausfallen.

Die Aufgabe der vorliegenden Erfindung ist es somit, eine Zweiradspiegelhalterung zu schaffen, mit der eine einfache Verstellung des Spiegelhalterarms gegenüber dem Zweiradlenker möglich ist, ohne eine vollständige Demontage vornehmen und Werkzeug einsetzen zu müssen. Insbesondere soll auch die Lenkeroberfläche durch die aufgesetzte Zweiradspiegelhalterung unbeschädigt bleiben.

Diese Aufgabe wird gemäß der vorliegenden Erfindung durch eine Zweiradspiegelhalterung mit den Merkmalen des Anspruchs 1 gelöst.

Durch die Schwenkwinkelarretierung des Spiegelhalterelements gegenüber dem Lenkerbefestigungselement in einer bestimmten Ausgangswinkelstellung, welche insbesondere vom Benutzer einstellbar ist, kann der Benutzer jederzeit den Spiegel in eine vordefinierte Lage bringen, ohne neue Einstellarbeiten durchführen zu müssen. Für Transportzwecke hingegen kann er den Spiegel innerhalb des Schwenkwinkels mit etwas Kraft, mit der er die Reibung überwindet, ohne zusätzliches Werkzeug bewegen und in eine andere Winkelposition bringen, die für die Fahrt mit dem Zweirad zwar ungeeignet, für den Transport aber besser geeignet ist. Später kann der Spiegel wieder leicht in seine Fahrtstellung zurück gebracht werden, indem einfach das Spiegelhalterelement solange in der Ebene des Reibschlusses verschwenkt wird, bis es formschlüssig am Rand des vorgegebenen Schwenkwinkels anschlägt bzw. dort einrastet.

Durch die zusätzliche reibschlüssige Klemmung wird erreicht, dass eine einmal gewählte Stellung des Spiegels in einer fest eingestellten Winkellage während der Benutzung des Zweirads erhalten bleibt und dass eine gewisse Kraft aufgewendet werden muss, um den Schwenkwinkel bewusst zu verändern. Die Klemmung hält die Position des Spiegels aber gegen die Einflüsse von Fahrtwind und Erschütterungen stabil.

Gemäß einer ersten bevorzugten Ausführungsform ist für die Ausbildung der Klemmung eine Paarung von einem Konuskegel und einer kompatiblen Konusaufnahme vorgesehen, wobei wiederum bei einer möglichen Ausführungsform der Konuskegel an dem lenkerseitigen Zwischenelement ausgebildet ist und die zugehörige Aufnahme an der Spiegelarmaufnahme und bei einer anderen Ausführungsform genau umgekehrt.

Über gegeneinander vorgespannte Paare von Konuskegel und Konusaufnahme wird bei entsprechend sorgfältiger Fertigung eine Klemmung über die gesamte Fläche des Kegelstumpfmantels bewirkt. Selbst wenn die jeweiligen Konuswinkel leicht abweichend voneinander gefertigt sind, so entsteht doch in jedem Fall eine durchlaufende Berührungslinie über den gesamten Umfang. Damit bestehen ausreichende Klemmkräfte durch Reibschluss, um den Zweiradspiegel in der gewählten Stellung zu halten. Andererseits können diese Kräfte von Hand überwunden werden, um den Arm des Zweiradspiegels zur Mitte des Zweiradlenkers hin zu schwenken, wenn z. B. das Fahrrad auf einem Fahrradträger transportiert werden soll.

Zur Ausbildung des Zwischenelements kommt insbesondere ein Polyamid oder ein weicher, polyolefinischer Kunststoff wie Polypropylen oder Polyethylen in Frage, der relativ weich ist und der entsprechend gute Gleiteigenschaften besitzt, sodass eine Verdrehung der Spiegelarmaufnahme gegenüber dem Lenkerbefestigungselement möglich ist, ohne das Spannelement zur Verspannung des Konuskegels mit der Konusaufnahme zuvor lösen zu müssen.

Gemäß einer weiteren Ausführungsform wird die Klemmung durch eine Verspannung des Spiegelhalterelements gegen das Zwischenelement mit einem zwischengelegten Dichtungsringelement wie beispielsweise einem O-Ring bewirkt. Um diesen besser zu führen, sind bevorzugt Ringnuten an dem Zwischenelement und dem Spiegelhalterelement angebracht.

Zur Herstellung der Schwenkwinkelarretierung ist gemäß einer ersten Ausführungsform am Außenumfang des Zwischenelements ein radial nach außen weisendes Anschlagelement vorgesehen. Als Gegenstück ist an der Unterseite des Spiegelhalterelements, insbesondere an der Unterseite der Spiegelarmaufnahme, ein weiteres Anschlagelement ausgebildet, das gegen das Anschlagelement des Zwischenelements läuft, wenn die vorgesehene Endstellung erreicht ist. Je nach Breite der aneinander liegenden Anschlagelemente wird nur ein kleiner Winkel gesperrt, so dass der Spiegel in der Reibschlussebene von einer Randlage des Festanschlags bis zur anderen um einen Winkel von bis zu 355° verschwenkt werden kann. Durch Vorsehung mehrere Anschlagelemente oder breiterer Anschlagelemente kann der Winkel entsprechend verkürzt werden, sofern gewünscht.

Eine weitere vorteilhafte Ausführungsform sieht vor, dass die formschlüssige Schwenkwinkelarretierung durch ein Anschlagelement ausgebildet ist, das an dem Spiegelhalterelement federnd und axial beweglich gelagert ist und das formschlüssig am Konuskegel in Eingriff zu bringen ist. Damit wird ebenfalls eine bestimmte Ausgangswinkellage des Spiegelhalterelements für den Benutzer deutlich sicht- und fühlbar eingenommen. Insbesondere greift eine Rippe am Anschlagelement in eine Nut am Konuskegel ein, wobei alle Kanten soweit gerundet bzw. angefast sind, dass das federnd gelagerte Anschlagelement selbststätig aus der Nut ausrückt, wenn das Spiegelhalterelement vom Benutzer bewusst verdreht wird. Dies bringt den weiteren Vorteil mit sich, dass der Endanschlag eine Überdrehung nicht vollständig verhindert , so dass eine Drehung in beide Richtungen möglich ist, z.B. um eine günstige Transportstellung einzustellen, und dass bei Kollisionen der Spiegelarm auch dann ausgerückt werden kann, wenn das Hindernis nicht von vorn, in Fahrtrichtung des Zweirads gesehen, sondern von hinten auf den Spiegelhalterarm auftrifft.

Durch die Schaffung einer Möglichkeit der Veränderung der Winkellage des Zwischenelements gegenüber dem Lenkerbefestigungselement kann dieser feste oder auskoppelbare Endanschlag variiert werden. Der Benutzer wählt also einmalig bei der Montage eine bestimmte Winkelstellung des wenigstens einen Anschlagelements vor, bevor er die Spiegelarmaufnahme und das Spannelement einsetzt. Die Veränderung des Schwenkwinkels wird erfindungsgemäß dadurch ermöglicht, dass mit dem Lenkerbefestigungselement, dem Zwischenelement und dem Spiegelhalterelement drei aufeinander liegende Elemente vorhanden sind, zwischen denen Ebenen ausgebildet werden, in denen eine Winkeländerung möglich ist. Die eine Ebene wird dafür benutzt, den Schwenkwinkel zu begrenzen und die damit mögliche Schwenkbewegung durch die Klemmung einzuschränken, und die andere Ebene dient dazu, den nutzbaren Schwenkwinkel bzw. einen Endanschlag dafür einzustellen.

Vorzugsweise erfolgt die Vorgabe des Schwenkwinkels in der Ebene der Paarung zwischen dem unteren Lenkerbefestigungselement und dem mittleren Zwischenelement, während die Schwenkwinkelarretierung mit der Klemmung in der oberen Ebene zwischen dem Zwischenelement und dem Spiegelhalterelement erfolgt.

Die Einstellung der Ausgangswinkellage des möglichen Schwenkwinkels wird vorzugsweise in Form einer formschlüssigen Winkelarretierung ausgebildet. Diese ist insbesondere dadurch geschaffen, dass an der Unterseite des Zwischenelements wenigstens eine Ausnehmung vorgesehen ist, in welche ein Vorsprung am Lenkerbefestigungselement eingreift. Vorsprung und Ausnehmung können wiederum auch in umgekehrter Weise angeordnet sein.

Besonders bevorzugt ist, dass an der Unterseite des Zwischenelements eine Vielzahl von Ausnehmungen auf einem einheitlichen Teilkreis vorgesehen ist und dass an dem Lenkerbefestigungselement auf dem gleichen Teilkreis wenigstens ein zapfenförmiger Vorsprung, insbesondere mehrere zapfenförmige Vorsprünge, vorgesehen ist (sind). Sind beispielsweise zwölf Ausnehmungen und ein Zapfen vorgesehen, so kann der Benutzer die Winkellage in Schritten von jeweils 30° verändern, wenn die Ausnehmungen über einen vollständigen Teilkreis hinweg gleichmäßig verteilt sind.

Möglich ist auch, nur einen bestimmten Winkelbereich mit der formschlüssigen Winkelarretierung zu versehen und in diesem Winkelbereich, in dem eine sinnvolle Positionierung für den Fahrbetrieb vorgesehen ist, kleinere Winkelteilungen vorzusehen, um eine entsprechend feinere Positionierung des Anschlagelements vornehmen zu können.

Die Erfindung wird anhand von Ausführungsbeispielen und mit Bezug auf die Zeichnungen näher erläutert. Die Figuren zeigen im Einzelnen:
- Fig. 1: eine erfindungsgemäße Zweiradspiegelhalterung gemäß einer ersten Ausführungsform in perspektivischer Explosionsansicht von oben;
- Fig. 2: die Zweiradspiegelhalterung in perspektivischer Explosionsansicht von unten;
- Fig. 3: das Lenkerbefestigungselement in Draufsicht von unten;
- Fig. 4: eine erfindungsgemäße Zweiradspiegelhalterung gemäß einer zweiten Ausführungsform in perspektivischer Explosionsansicht von oben;
- Fig. 5: eine erfindungsgemäße Zweiradspiegelhalterung gemäß einer dritten Ausführungsform in perspektivischer Explosionsansicht von schräg unten und
- Fig. 6: ein Anschlagelement zur Spiegelhalterung nach Figur 5, in perspektivscher Ansicht.

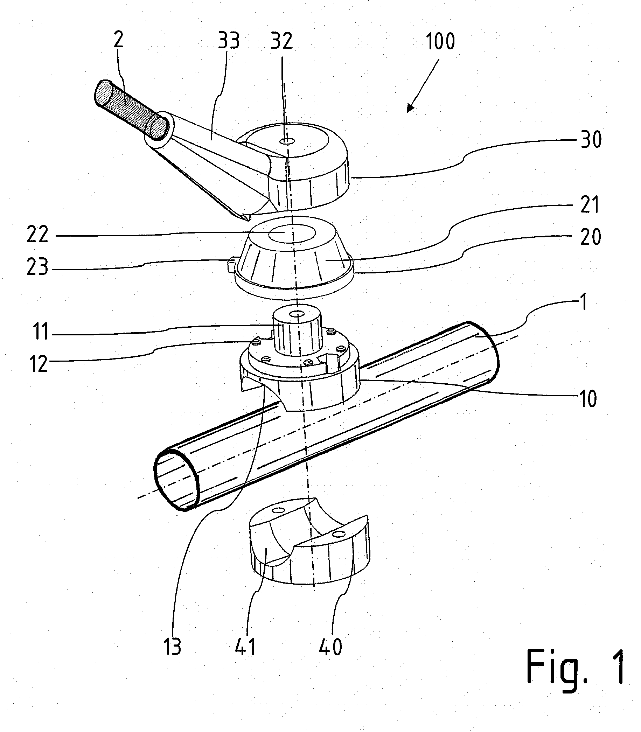

Fig. 1 zeigt eine erste Ausführungsform einer erfindungsgemäßen Zweiradspiegelhalterung 100 mit ihren Einzelteilen, wobei die als Spannelemente für die Klemmung bevorzugt vorgesehene Schraube mit Sechskantmutter nicht dargestellt ist.

Im Wesentlichen besteht die Zweiradspiegelhalterung 100 aus:
- dem Lenkerbefestigungselement 10, welches auf einen Zweiradlenker 1 aufgesetzt werden kann,
- einem Zwischenelement 20 und
- einem Spiegelhalterelement 30, welches eine Spiegelarmaufnahme 33 aufweist.

Mit der Spiegelarmaufnahme 33 verbunden ist beispielsweise ein metallischer Rundstab 2 als Haltearm für einen endseitig daran zu befestigenden Spiegel.

Zur Montage der Zweiradspiegelhalterung 100 an dem Zweiradlenker 1 ist ein Bügelelement 40 vorgesehen, welches den Zweiradlenker 1 teilweise umschließt. Im dargestellten Ausführungsbeispiel ist an der Unterseite des Lenkerbefestigungselements 10 eine im Querschnitt halbkreisförmige Vertiefung 13 vorgesehen, die an den Durchmesser des Zweiradlenkers 1 angepasst ist. Ein entsprechendes Gegenstück findet sich mit einer Vertiefung 41 am Bügelelement 40.

Wird das Lenkerbefestigungselement 10 mit dem Bügelelement 40 verschraubt, so wird das dazwischen befindliche Lenkradrohr geklemmt und das Lenkerbefestigungselement 10 wird am Zweiradlenker 1 fixiert.

Am Lenkerbefestigungselement 10 ist ein zentraler Zapfen 11 zur Aufnahme des Zwischenelements 20 erkennbar. Weiterhin sind mehrere zapfenförmige Vorsprünge 12 vorgesehen. Das Zwischenelement 20 weist eine zentrale Aufnahmebohrung 22 zur Aufnahme der Achse 11 auf.

Am Außenumfang des Zwischenelements 20 gemäß der in Figur 1 dargestellten ersten Ausführungsform ist über einen wesentlichen Teil der Höhe des Zwischenelements 20 ein Konuskegel 21 ausgebildet. Weiterhin ist ein radial nach außen weisendes Anschlagelement 23 angeformt.

Das Spiegelhalterelement 30 besitzt zudem eine zentrale Bohrung 32, durch welche hindurch eine Schraube geführt werden kann, mit welcher das Lenkerbefestigungselement 10, das Zwischenelement 20 und das Spiegelhalterelement 30 miteinander verbunden werden und eine Vorspannung auf die Kegelverbindung zwischen dem Zwischenelement 20 und dem Spiegelhalterelement 30 aufgebracht werden kann.

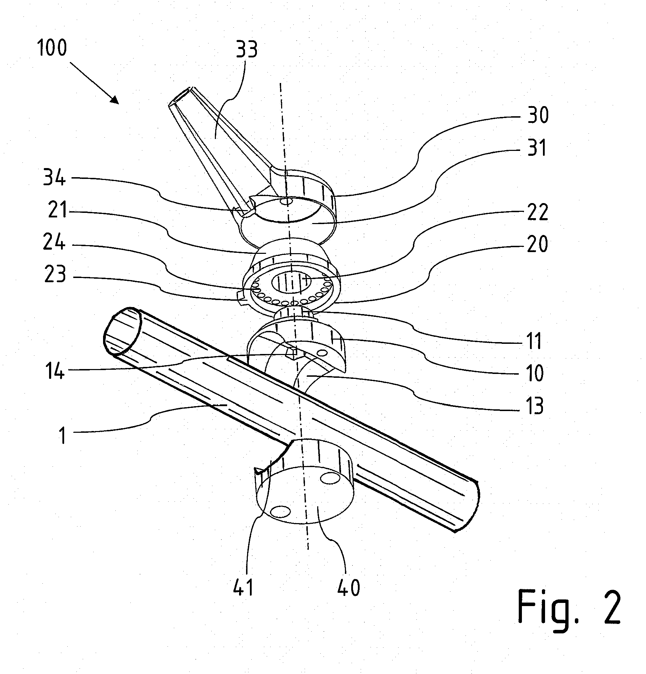

In Fig. 2 ist die auseinandergezogene Anordnung noch einmal von der Unterseite her dargestellt. An der Unterseite des Lenkerbefestigungselements 10 ist im Zentrum, in der Vertiefung 13, eine Sechskantaufnahme 14 zur Aufnahme einer nicht dargestellten Gewindemutter ausgebildet.

Die Ansicht von unten auf das Zwischenelement 20 zeigt eine Vielzahl von Ausnehmungen 24, die in engem Abstand dicht nebeneinander angeordnet sind, um eine feine Winkeljustierung des Zwischenelements 20 gegenüber dem Lenkerbefestigungselement 10 vornehmen zu können. Die in Fig. 1 am Spiegelhalterelement 10 erkennbaren Zapfen 12 greifen jeweils in eine der Ausnehmungen 24 am Zwischenelement 20 ein.

Erkennbar ist in der Darstellung nach Fig. 2 weiterhin eine Konusaufnahme 31 an der Unterseite des Spiegelhalterelements 30, in welcher der Konuskegel 21 eingesetzt wird.

Weiterhin ist dargestellt, dass an der Unterseite der Spiegelarmaufnahme 33 des Spiegelhalterelements 30 ein Vorsprung 34 als Anschlagelement ausgebildet ist, das so weit nach unten ragt, dass es im montierten Zustand aller Elemente 10, 20, 30 gegen das Anschlagelement 23 des Zwischenelements 20 läuft, wenn das Spiegelhalterelement 30 geschwenkt wird.

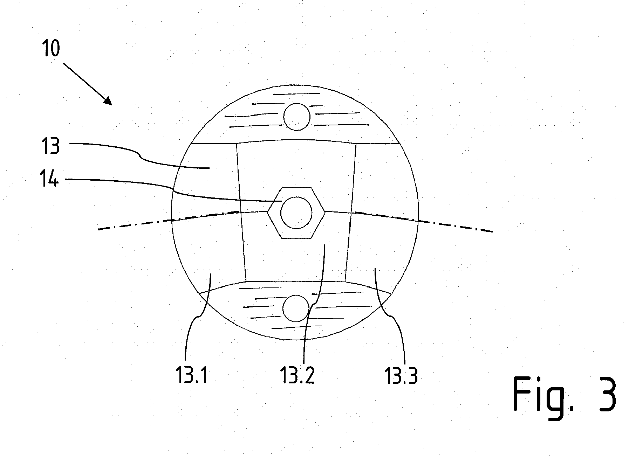

Fig. 3 zeigt noch eine Besonderheit bezüglich der Vertiefung 13 an der Unterseite des Spiegelhalterelements 10. Diese ist nämlich nicht als durchlaufende Rinne gestaltet, sondern besitzt mehrere Abschnitte. Die äußeren Abschnitte 13.1, 13.3 sind in einem Winkel von wenigen Grad in Bezug auf eine durch das Zentrum führende Mittelachse ausgerichtet. Der mittlere Abschnitt 13.2 ist, wie die in etwa trapezförmige Kontur in Fig. 3 zeigt, ebenfalls nicht völlig gerade, sondern als Ringsegment ausgeführt. Durch diese Kontur der Vertiefung 13 an der Unterseite des Spiegelhalterelements 10 und bei einer spiegelbildlichen Ausbildung der zugehörigen Vertiefung 41 am Bügelelement 40 ist es insbesondere möglich, die an Zweiradlenkern üblichen Krümmungen auszugleichen und die erfindungsgemäße Zweiradspiegelhalterung 100 auch im Bereich von Krümmungen am Lenker 1 montieren zu können, da die geraden Abschnitte an Zweiradlenkern meist schon durch Bremsen und Gangwahlhebel belegt sind.

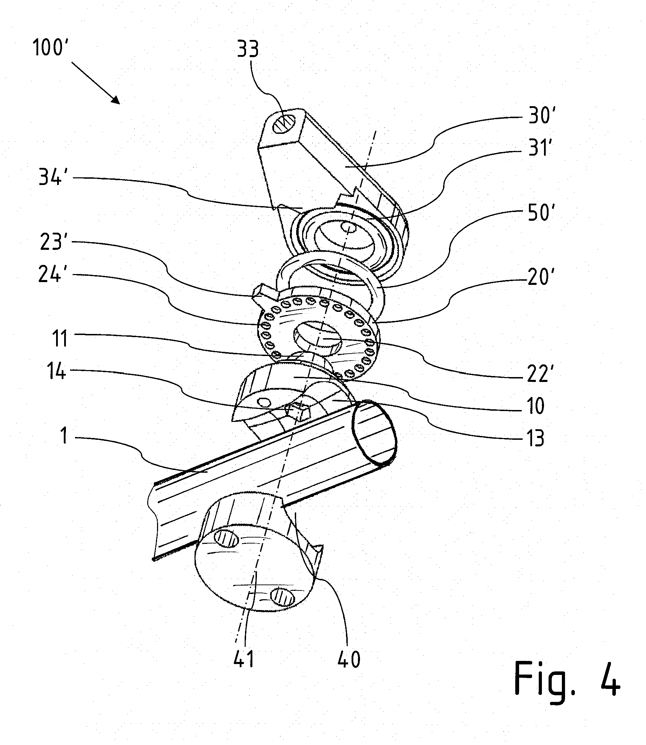

Eine zweite Ausführungsform einer erfindungsgemäßen Zweiradspiegelhalterung 100' zeigt Figur 4. Auch die zweite Ausführungsform umfasst ein Lenkerbefestigungselement 10, ein Zwischenelement 20' sowie ein Spiegelhalterelement 30'.

An dem Spiegelhalterelement 30' und dem Zwischenelement 20' sind wie bei der ersten Ausführungsform Anschlagelemente 23, 34 vorgesehen, um einen Festanschlag zu bilden und den Schwenkwinkel zu begrenzen. Auch ist wie in der Fügeebene zwischen dem Lenkerbefestigungselement 10 und dem Zwischenelement 20' ist über Ausnehmungen 24 und Zapfen 12 eine zur ersten Ausführungsform identische Schwenkwinkelarretierung ausgebildet.

Unterschiedlich bei der zweiten Ausführungsform der Zweiradspiegelhalterung 100' ist hingegen die Ausbildung der Klemmung zwischen dem Zwischenelement 20' und dem Spiegelhalterelement 30'. Diese wird durch einen zwischengelegten O-Ring 50' aus elastomerem Werkstoff erreicht. Der O-Ring ist in einer Ringnut 31' geführt, welche an der Unterseite des Spiegelhalterelements 30' eingebracht ist, sowie in einer weiteren Ringnut, welche an der Oberseite des Zwischenelement 20' eingebracht ist und hier nicht sichtbar ist.

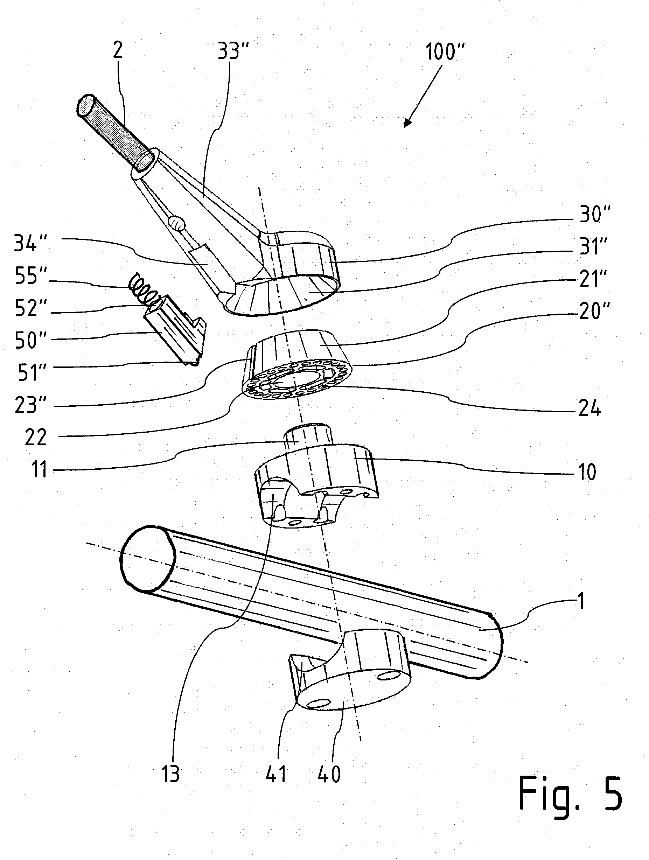

Figur 5 zeigt eine dritte Ausführungsform einer Zweiradspiegelhalterung 100", die in der Reibschlussebene ebenfalls einen Konuskegel 21" an einem Zwischenelement 20" und eine Konusaufnahme 31" besitzt, wie bei der ersten Ausführungsform 100 auch. Ebenfalls ist das Lenkerbefestigungselement 10 unverändert zu den vorherigen Ausführungsformen, und auch die Verbindung des Lenkerbefestigungselements 10 mit dem Zwischenelement 20" über einen Zapfen 10 und eine zentrale Aufnahmebohrung 22" ist gleichartig. Ebenso wird die Lage des Schwenkwinkels in der Verbindung zwischen Lenkerbefestigungselement 10 und Zwischenelement 20" über hier nicht sichtbare Zapfen am Lenkerbefestigungselement 10 und zugehörige Aufnahmen 24" an der Unterseite des Zwischenelements 20' bewirkt.

Unterschiedlich ist bei der dritten Ausführungsform die Ausbildung der formschlüssigen Schwenkwinkelarretierung. Hierfür ist ein Anschlagelement 50" vorgesehen, das in einer Führungsausnehmung 34" unten am Spiegelhalterelement 30" gelagert ist, und zwar so, dass ein kleiner Verschiebeweg in radialer Richtung auf die Mittelachse des Konuskegels 21" zu möglich ist. Eine Druckfeder 55" ist teilweise in einer Bohrung 52" an dem Anschlagelement 50" aufgenommen und bewirkt, dass das Anschlagelement 50" mit seinem stegförmigen Vorsprung 51" an die Außenfläche des Konuskegels 21" angepresst wird. In der voreingestellten Endlage rückt der Vorsprung 51" in die sich in axialer Richtung über die Höhe des Konuskegels 21" erstreckende Nut 23" ein. Hierdurch wird dem Nutzer die voreingestellte Endlage signalisiert und es wird ein zusätzlicher Widerstand geschaffen, der überwunden werden muss, bevor die Lage des Spiegelarms 2 verändert werden kann. Um die formschlüssige Kopplung des Anschlagelements 50" mit dem Konuskegel 21" ohne größeren Aufwand aufheben zu können, ist bevorzugt vorgesehen, die seitlichen Kanten an dem Steg 51" und/ oder an der Nut 23" zu runden oder mit einer Fase zu versehen oder von vornherein trapezförmige oder dreieckige Profilformen vorzusehen. Wird das Spiegelhalterelement 30" mit Kraft gegenüber dem Zwischenelement 20" verdreht, so wird das Anschlagelement 50" in seiner Führungsausnehmung 34" zurückgeschoben und behindert die weitere Drehung des Spiegelhalterelements 30" gegenüber dem Unterbau nicht mehr.

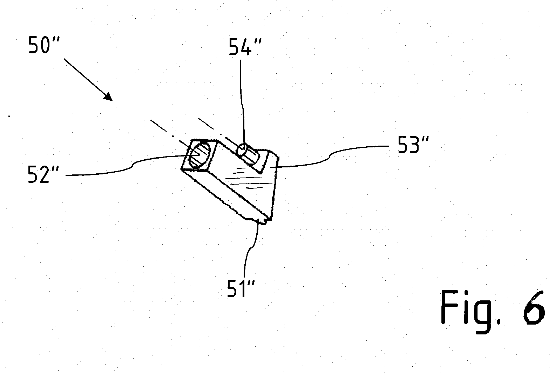

Figur 6 zeigt das Anschlagelement 50" im Detail. Es ist L-förmig ausgebildet ist, wobei der lange Schenkel des Anschlagelements 50" die Bohrung 52" zur Aufnahme der Druckfeder 55" aufweist. An dem kurzen Schenkel 53" ist ein Stiftelement 54" angeordnet, das sich in Richtung des Verschiebungswegs erstreckt, insbesondere parallel zur Bohrung 52", die auch die Achse für die Druckfeder 55" definiert. Das Stiftelement 54" greift in eine weitere Bohrung oder Hinterschneidung im Spiegelhalterelement 30" ein, die in der Führungsausnehmung 34" mündet, so dass eine formschlüssige Führung des Anschlagelements 50" geschaffen wird, wobei das Anschlagelement 50" zugleich gegen Herausfallen aus der Führungsausnehmung 34" gesichert ist.

## Patentansprüche

1. Zweiradspiegelhalterung (100; 100'; 100"), wenigstens umfassend:
- ein Lenkerbefestigungselement (10) zur Befestigung an einem Zweiradlenker (1);
- ein Spiegelhalterelement (30; 30'; 30") mit einer Spiegelarmaufnahme (33; 33', 33");
- eine formschlüssige Schwenkwinkelarretierung zur Festlegung einer Ausgangswinkelstellung des Spiegelhalterelements (30; 30'; 30") gegenüber dem Lenkerbefestigungselement (10);
**dadurch gekennzeichnet,**
- **dass** zwischen dem Lenkerbefestigungselement (10) und dem Spiegelhalterelement (30; 30'; 30") ein Zwischenelement (20; 20'; 20"); angeordnet ist
- **dass** an der Zweiradspiegelhalterung (100; 100'; 100")
• in einer Ebene zwischen dem Lenkerbefestigungselement (10) und dem Zwischenelement (20; 20'; 20") oder
• in einer Ebene zwischen dem Zwischenelement (20; 20'; 20") und dem Spiegelhalterelement (30; 30'; 30")
eine reibschlüssige Klemmung ausgebildet ist, welche einer Verdrehung des Spiegelhalterelements (30; 30'; 30") gegenüber dem Lenkerbefestigungselement (10) entgegen wirkt,
- **dass** die formschlüssige Schwenkwinkelarretierung zur Festlegung einer Ausgangswinkelstellung des Spiegelhalterelements (30; 30'; 30") gegenüber dem Lenkerbefestigungselement (10) in der jeweils anderen Ebene ausgebildet ist und
- **dass** das Lenkerbefestigungselement (10) mit einem Bügelelement (40) zu verbinden ist, das den Zweiradlenker (1) umgreift.

2. Zweiradspiegelhalterung (100; 100") nach Anspruch 1, **dadurch gekennzeichnet, dass** die reibschlüssige Klemmung über einen Konuskegel (21; 21") und eine Konusaufnahme (31; 31") zur Aufnahme des Konuskegels (21; 21") ausgebildet ist, wobei der Konuskegel (21; 21") mittels eines Spannelements gegen die Konusaufnahme (31) verspannbar ist.

3. Zweiradspiegelhalterung (100; 100") nach Anspruch 2, **dadurch gekennzeichnet, dass** der Konuskegel (21; 21") an der Oberseite des Zwischenelements (20; 20") und die Konusaufnahme (31; 31") an der Unterseite des Spiegelhalterelements (30; 30") angeordnet ist.

4. Zweiradspiegelhalterung (100') nach Anspruch 1, **dadurch gekennzeichnet, dass** die reibschlüssige Klemmung über eine Verspannung des Zwischenelements (20') gegenüber dem Spiegelhalterelement (30') und eine dazwischen eingefügtes Dichtungsringelement (50') bewirkt wird.

5. Zweiradspiegelhalterung (100') nach Anspruch 4, **dadurch gekennzeichnet, dass** an der Oberseite des Zwischenelements (20') und an der Unterseite des Spiegelhalterelements (30') jeweils eine Ringnut (31') zur Aufnahme eines O-Rings als Dichtungsringelement (50') ausgebildet ist.

6. Zweiradspiegelhalterung (100") nach Anspruch 2 oder 3, **dadurch gekennzeichnet, dass** die formschlüssige Schwenkwinkelarretierung durch wenigstens ein Anschlagelement (50") ausgebildet ist, das an dem Spiegelhalterelement (30") federnd und axial beweglich gelagert ist und das formschlüssig am Konuskegel (21") in Eingriff zu bringen ist.

7. Zweiradspiegelhalterung (100") nach Anspruch 6, **dadurch gekennzeichnet, dass** das Anschlagelement (50") einen an den Seitenkanten gerundeten oder angefasten, stegförmigen Vorsprung (51") aufweist, der in wenigstens eine Nut (23") am Konuskegel (21") eingreift, deren Begrenzungskanten ebenfalls gerundet oder mit einer Fase versehen sind.

8. Zweiradspiegelhalterung (100") nach Anspruch 6 oder 7, **dadurch gekennzeichnet, dass** das Anschlagelement (50") L-förmig ausgebildet ist und in einer Ausnehmung (34") an der Unterseite des Spiegelhalterelements (30") gelagert ist, wobei der lange Schenkel des Anschlagelements eine Bohrung (52") zur Aufnahme einer Druckfeder (55") aufweist und wobei an dem kurzen Schenkel (32") ein sich in Verschiebungsrichtung erstreckendes Stiftelement (54") vorgesehen ist, das in eine Bohrung am Spiegelhalterelement (30") eingreift.

9. Zweiradspiegelhalterung (100; 100') nach wenigstens einem der Ansprüche 1 bis 8, **dadurch gekennzeichnet, dass** die formschlüssige Schwenkwinkelarretierung über wenigstens ein erstes Anschlagelement (23; 23') an dem Zwischenelement (20; 20') und wenigstens ein zweites Anschlagelement (34; 34') an dem Spiegelhalterelement (30; 30') ausgebildet ist.

10. Zweiradspiegelhalterung (100; 100') nach Anspruch 9, **dadurch gekennzeichnet, dass** das zweite Anschlagelement (23; 23') des Zwischenelements (20; 20') radial nach außen über den Konuskegel (21, 21') hinausragt.

11. Zweiradspiegelhalterung (100; 100'; 100") nach wenigstens einem der Ansprüche 1 bis 10, **dadurch gekennzeichnet, dass** das Lenkerbefestigungselement (10) eine Achse (11) aufweist, auf die das Zwischenelement (20; 20'; 20") mit einer zentralen Bohrung (22; 22'; 22") aufsetzbar ist.

12. Zweiradspiegelhalterung (100; 100'; 100") nach wenigstens einem der Ansprüche 1 bis 11, **dadurch gekennzeichnet, dass** an der Unterseite des Zwischenelements (20; 20'; 20") wenigstens eine Ausnehmung (24; 24'; 24") vorgesehen ist und am Lenkerbefestigungselement (10) wenigstens ein Vorsprung (12) angeordnet ist, der in die Ausnehmung (24; 24'; 24") eingreift.

13. Zweiradspiegelhalterung (100; 100'; 100") nach Anspruch 12, **dadurch gekennzeichnet, dass** an der Unterseite des Zwischenelements (20; 20'; 20") eine Vielzahl von Ausnehmungen (24; 24'; 24") auf einem einheitlichen Teilkreis vorgesehen sind und dass an dem Lenkerbefestigungselement (10) auf dem gleichen Teilkreis wenigstens ein zapfenförmiger Vorsprung (12) vorgesehen ist, der in eine der Ausnehmungen (24; 24'; 24") eingreift.

14. Zweiradspiegelhalterung (100; 100'; 100") nach wenigstens einem der Ansprüche 1 bis 13, **dadurch gekennzeichnet, dass** das Lenkerbefestigungselement (10) an seiner Unterseite eine rinnenförmige Vertiefung (13) zum Aufsetzen auf den Zweiradlenker (1) aufweist.

15. Zweiradspiegelhalterung (100; 100'; 100") nach Anspruch 14, **dadurch gekennzeichnet, dass** die Vertiefung (13) am Lenkerbefestigungselement (10) und/oder die Vertiefung am Bügelelement (40) aus mehreren Abschnitten (13.1, 13.2, 13.3) gebildet sind, wobei die Mittellinien benachbarter Abschnitte (13.1, 13.2,13.3) in einem Winkel von 5° bis 15° zueinander angestellt sind und bei einem zentralen Abschnitt (13.2) der Vertiefung (13) in Draufsicht eine randseitig Begrenzungslinie länger ist als die an der Vertiefung jeweils gegenüberliegende Begrenzungslinie.

## Claims

1. Bicycle-mirror holder (100; 100'; 100") at least comprising:
- a handlebar-fastening element (10) for fastening on a bicycle handlebar (1);
- a mirror-retaining element (30; 30'; 30") with a mirror-arm mount (33; 33'; 33");
- a form-fitting pivoting-angle-arresting means for defining a starting-angle position of the mirror-retaining element (30; 30'; 30") in relation to the handlebar-fastening element (10) ;
**characterized**
- **in that** an intermediate element (20; 20'; 20") is arranged between the handlebar-fastening element (10) and the mirror-retaining element (30; 30'; 30");
- **in that** the bicycle-mirror holder (100; 100'; 100") incorporates,
• in a plane between the handlebar-fastening element (10) and the intermediate element (20; 20'; 20")
or
• in a plane between the intermediate element (20; 20'; 20") and the mirror-retaining element (30; 30'; 30"),
a friction-fit clamping means, which counteracts rotation of the mirror-retaining element (30; 30'; 30") in relation to the handlebar-fastening element (10),
- **in that** the form-fitting pivoting-angle-arresting means for defining a starting-angle position of the mirror-retaining element (30; 30'; 30") in relation to the handlebar-fastening element (10) is formed in the respectively other plane; and
- **in that** the handlebar-fastening element (10) can be connected to a bracket element (40), which engages around the bicycle handlebar (1).

2. Bicycle-mirror holder (100; 100") according to Claim 1, **characterized in that** the friction-fit clamping means is formed via a cone (21; 21") and a cone mount (31; 31") for accommodating the cone (21; 21"), wherein the cone (21; 21") can be braced against the cone mount (31) by means of a tensioning element.

3. Bicycle-mirror holder (100; 100") according to Claim 2, **characterized in that** the cone (21; 21") is arranged on the upper side of the intermediate element (20; 20") and the cone mount (31; 31") is arranged on the underside of the mirror-retaining element (30; 30").

4. Bicycle-mirror holder (100') according to Claim 1, **characterized in that** the friction-fit clamping means is realized by virtue of the intermediate element (20') being braced in relation to the mirror-retaining element (30') and of a sealing-ring element (50') inserted therebetween.

5. Bicycle-mirror holder (100') according to Claim 4, **characterized in that** a respective annular groove (31') for accommodating an O-ring in the form of sealing-ring element (50') is formed on the upper side of the intermediate element (20') and on the underside of the mirror-retaining element (30').

6. Bicycle-mirror holder (100") according to Claim 2 or 3, **characterized in that** the form-fitting pivoting-angle-arresting means is formed by at least one stop element (50"), which is mounted in a resilient and axially movable manner on the mirror-retaining element (30") and can be brought into form-fitting engagement on the cone (21").

7. Bicycle-mirror holder (100") according to Claim 6, **characterized in that** the stop element (50") has a crosspiece-like protrusion (51"), which is rounded or chamfered on the side edges and engages in at least one groove (23") on the cone (21"), the boundary edges of said groove likewise being rounded or provided with a chamfer.

8. Bicycle-mirror holder (100") according to Claim 6 or 7, **characterized in that** the stop element (50") is of L-shaped design and is mounted in an aperture (34") on the underside of the mirror-retaining element (30"), wherein the long leg of the stop element has a bore (52") for accommodating a compression spring (55"), and wherein the short leg (32") has provided on it a pin element (54"), which extends in the displacement direction and engages in a bore on the mirror-retaining element (30").

9. Bicycle-mirror holder (100; 100') according to at least one of Claims 1 to 8, **characterized in that** the form-fitting pivoting-angle-arresting means is formed via at least one first stop element (23; 23') on the intermediate element (20; 20') and at least one second stop element (34; 34') on the mirror-retaining element (30; 30').

10. Bicycle-mirror holder (100; 100') according to Claim 9, **characterized in that** the second stop element (23; 23') of the intermediate element (20; 20') projects radially outwards beyond the cone (21, 21').

11. Bicycle-mirror holder (100; 100'; 100") according to at least one of Claims 1 to 10, **characterized in that** the handlebar-fastening element (10) has a stub (11), on which the intermediate element (20; 20'; 20") can be positioned by way of a central bore (22; 22'; 22").

12. Bicycle-mirror holder (100; 100'; 100") according to at least one of Claims 1 to 11, **characterized in that** at least one aperture (24; 24'; 24") is provided on the underside of the intermediate element (20; 20'; 20") and at least one protrusion (12) is arranged on the handlebar-fastening element (10), the protrusion engaging in the aperture (24; 24'; 24").

13. Bicycle-mirror holder (100; 100'; 100") according to Claim 12, **characterized in that** a multiplicity of apertures (24; 24'; 24") are provided at uniform spacings on a pitch circle on the underside of the intermediate element (20; 20'; 20"), and **in that** at least one stud-like protrusion (12) is provided, on the same pitch circle, on the handlebar-fastening element (10), the protrusion engaging in one of the apertures (24; 24'; 24").

14. Bicycle-mirror holder (100; 100'; 100") according to at least one of Claims 1 to 13, **characterized in that** the handlebar-fastening element (10) has, on its underside, a channel-like depression (13), for placing it in position on the bicycle handlebar (1).

15. Bicycle-mirror holder (100; 100'; 100") according to Claim 14, **characterized in that** the depression (13) on the handlebar-fastening element (10) and/or the depression on the bracket element (40) are/is formed from a plurality of portions (13.1, 13.2, 13.3), wherein the centre lines of adjacent portions (13.1, 13.2, 13.3) are positioned at an angle of 5° to 15° in relation to one another and in a central portion (13.2) of the depression (13), as seen in plan view, one peripheral boundary line is longer than the boundary line located at the respectively opposite side of the depression.

## Revendications

1. Support de rétroviseur pour deux-roues (100 ; 100' ; 100"), comprenant au moins :
- un élément de fixation de guidon (10) pour la fixation à un guidon de deux-roues (1) ;
- un élément de support de rétroviseur (30 ; 30' ; 30") doté d'une prise de branche de rétroviseur (33 ; 33', 33") ;
- un verrouillage d'angle de pivotement à forme bloquante destiné à fixer un réglage d'angle de sortie de l'élément de support de rétroviseur (30 ; 30' ; 30") par rapport à l'élément de fixation de guidon (10) ;
**caractérisé en ce**
- **qu'**un élément intermédiaire (20 ; 20' ; 20") est agencé entre l'élément de fixation de guidon (10) et l'élément de support de rétroviseur (30 ; 30' ; 30"),
- **qu'**au niveau du support de rétroviseur pour deux-roues (100 ; 100' ; 100")
• dans un plan entre l'élément de fixation de guidon (10) et l'élément intermédiaire (20 ; 20' ; 20")
ou
• dans un plan entre l'élément intermédiaire (20 ; 20' ; 20") et l'élément de support de rétroviseur (30 ; 30' ; 30")
est formé un blocage par friction, s'opposant à une rotation de l'élément de support de rétroviseur (30 ; 30' ; 30") par rapport à l'élément de fixation de guidon (10),
- en ce que le verrouillage d'angle de pivotement à forme bloquante destiné à fixer un réglage d'angle de sortie de l'élément de support de rétroviseur (30 ; 30' ; 30") par rapport à l'élément de fixation de guidon (10) est formé respectivement dans l'autre plan et
- en ce que l'élément de fixation de guidon (10) doit être relié à un élément de cintre (40), lequel entoure le guidon de deux-roues (1).

2. Support de rétroviseur pour deux-roues (100 ; 100") selon la revendication 1, **caractérisé en ce que** le blocage par friction est formé par le biais d'un pointeau conique (21 ; 21") et d'un logement conique (31 ; 31") destiné à accueillir le pointeau conique (21 ; 21"), dans lequel le pointeau conique (21 ; 21") est serrable dans le logement conique (31) au moyen d'un élément de serrage.

3. Support de rétroviseur pour deux-roues (100 ; 100") selon la revendication 2, **caractérisé en ce que** le pointeau conique (21 ; 21") est agencé à la face supérieure de l'élément intermédiaire (20 ; 20") et le logement conique (31 ; 31") est agencé à la face inférieure de l'élément de support de rétroviseur (30 ; 30").

4. Support de rétroviseur pour deux-roues (100') selon la revendication 1, **caractérisé en ce que** le blocage par friction est effectué au moyen d'un serrage de l'élément intermédiaire (20') contre l'élément de support de rétroviseur (30') et un élément d'étanchéité (50') inséré entre ceux-ci.

5. Support de rétroviseur pour deux-roues (100') selon la revendication 4, **caractérisé en ce qu'**une rainure annulaire (31') est formée respectivement sur la face supérieure de l'élément intermédiaire (20') et sur la face inférieure de l'élément de support de rétroviseur (30') pour recevoir un joint annulaire en tant qu'élément d'étanchéité (50').

6. Support de rétroviseur pour deux-roues (100") selon la revendication 2 ou 3, **caractérisé en ce que** le verrouillage d'angle de pivotement à forme bloquante est formé par le biais d'au moins un élément de butée (50"), celui-ci étant monté élastiquement et axialement mobile sur l'élément de support de rétroviseur (30") et conçu en forme bloquante pour venir en prise avec le pointeau conique (21").

7. Support de rétroviseur pour deux-roues (100") selon la revendication 6, **caractérisé en ce que** l'élément de butée (50") comporte une proéminence (51") en forme de traverse et arrondie ou chanfreinée au bord latéral, celle-ci venant en prise dans au moins une rainure (23") sur le pointeau conique (21"), dont les bords de limitation sont prévus également arrondis ou dotés d'un chanfrein.

8. Support de rétroviseur pour deux-roues (100") selon la revendication 6 ou 7, **caractérisé en ce que** l'élément de butée (50") est conçu en forme de L et monté dans une cavité (34") sur la face inférieure de l'élément de support de rétroviseur (30"), dans lequel la branche longue de l'élément de butée comporte un alésage (52") destiné à accueillir un ressort de pression (55") et dans lequel un élément de tige (54") s'étendant dans la direction du déplacement est prévu sur la branche courte (32"), cet élément étant en prise dans un alésage sur l'élément de support de rétroviseur (30").

9. Support de rétroviseur pour deux-roues (100 ; 100') selon au moins une des revendications 1 à 8, **caractérisé en ce que** le verrouillage d'angle de pivotement à forme bloquante est formé par le biais d'au moins un premier élément de butée (23 ; 23') sur l'élément intermédiaire (20 ; 20') et d'au moins un deuxième élément de butée (34 ; 34') sur l'élément de support de rétroviseur (30 ; 30').

10. Support de rétroviseur pour deux-roues (100 ; 100') selon la revendication 9, **caractérisé en ce que** le deuxième élément de butée (23 ; 23') de l'élément intermédiaire (20 ; 20') dépasse radialement vers l'extérieur par le biais du pointeau conique (21,21').

11. Support de rétroviseur pour deux-roues (100 ; 100' ; 100") selon au moins une des revendications 1 à 10, **caractérisé en ce que** l'élément de fixation de guidon (10) comporte un axe (11), sur lequel l'élément intermédiaire (20 ; 20' ; 20") doté d'un alésage (22 ; 22' ; 22") peut être placé.

12. Support de rétroviseur pour deux-roues (100 ; 100' ; 100") selon au moins une des revendications 1 à 11, **caractérisé en ce qu'**au moins une cavité (24 ; 24' ; 24") est prévue sur la face inférieure de l'élément intermédiaire (20 ; 20' ; 20") et au moins une proéminence (12) qui est en prise dans la cavité (24 ; 24' ; 24") et est disposée sur l'élément de fixation de guidon (10).

13. Support de rétroviseur pour deux-roues (100 ; 100' ; 100") selon la revendication 12, **caractérisé en ce qu'**une pluralité de cavités (24 ; 24' ; 24") uniformément réparties sur un arc de cercle sont prévues sur la face inférieure de l'élément intermédiaire (20 ; 20' ; 20") et **en ce qu'**au moins une proéminence en forme de cône (12) sur le même arc de cercle est prévue sur l'élément de fixation de guidon (10), celle-ci étant en prise dans l'une des cavités (24 ; 24' ; 24").

14. Support de rétroviseur pour deux-roues (100 ; 100' ; 100") selon au moins une des revendications 1 à 13, **caractérisé en ce que** l'élément de fixation de guidon (10) comporte sur sa face inférieure un renfoncement (13) en forme de gouttière destiné au placement sur le guidon de deux-roues (1).

15. Support de rétroviseur pour deux-roues (100 ; 100' ; 100") selon la revendication 14, **caractérisé en ce que** le renfoncement (13) sur l'élément de fixation de guidon (10) et/ou le renfoncement sur l'élément de cintre (40) sont constitués de plusieurs sections (13.1, 13.2, 13.3), dans lequel les lignes médianes de sections voisines (13.1, 13.2, 13.3) forment un angle de 5° à 15° l'un avec l'autre et, sur une section centrale (13.2) du renfoncement (13) une ligne de délimitation côté bordure est plus longue en vue du dessus que la ligne de délimitation respectivement opposée sur le renfoncement.
